Europäisches Patentamt

European Patent Office

Office européen des brevets

(19)

(11) **EP 0 664 752 B1**

(12) **FASCICULE DE BREVET EUROPEEN**

(45) Date de publication et mention
de la délivrance du brevet:
**21.02.1996 Bulletin 1996/08**

(21) Numéro de dépôt: **93920915.1**

(22) Date de dépôt: **22.09.1993**

(51) Int. Cl.⁶: **B60T 13/575**

(86) Numéro de dépôt international: **PCT/FR93/00919**

(87) Numéro de publication internationale: **WO 94/08832**
**(28.04.1994 Gazette 1994/10)**

(54) **SERVOMOTEUR PNEUMATIQUE A GAIN VARIABLE**

PNEUMATISCHER KRAFTVERSTÄRKER MIT VERSTELLBAREM
KRAFTÜBERTRAGUNGSVERHÄLTNIS

VARIABLE GAIN PNEUMATIC BRAKE SERVO

(84) Etats contractants désignés:
**DE ES FR GB IT**

(30) Priorité: **22.10.1992 FR 9212639**

(43) Date de publication de la demande:
**02.08.1995 Bulletin 1995/31**

(73) Titulaire: **ALLIEDSIGNAL EUROPE SERVICES
TECHNIQUES
F-93700 Drancy (FR)**

(72) Inventeurs:
• **BENTZ, Jean-Paul
F-75011 Paris (FR)**
• **CASTEL, Philippe
F-75005 Paris (FR)**
• **CASTELLO, Olivier
F-93140 Bondy (FR)**

(74) Mandataire: **Bentz, Jean-Paul
F-93700 Drancy (FR)**

(56) Documents cités:
**EP-A- 0 097 865          US-A- 4 690 034**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un servomoteur pneumatique d'assistance au freinage pour véhicule à moteur, comprenant notamment, sensiblement disposés suivant un axe commun, une tige de commande propre à recevoir une force d'entrée, un clapet dont l'ouverture est commandée par application de cette force d'entrée sur la tige de commande, un organe de réaction propre à recevoir la force d'entrée et une fraction au moins de la force d'assistance et à opposer à cette force d'entrée une partie de cette fraction au moins de la force d'assistance, une tige de poussée propre à recevoir, en provenance au moins de l'organe de réaction, une force d'actionnement composée desdites forces d'entrée et d'assistance, des moyens de modulation pour régler le rapport de la force d'assistance à la force d'entrée, et une enveloppe rigide séparée de façon étanche en au moins deux chambres au moyen d'au moins une paroi mobile, susceptible d'être sollicitée, à l'ouverture du clapet, par une différence de pression entre les deux chambres et d'entraîner un piston propre à développer ladite force d'assistance.

De tels servomoteurs sont connus dans l'art antérieur et sont par exemple illustrés par les brevets US 4 493 243, US 4 671 167 et US 4 690 034.

Il est souvent utile, pour adapter un servomoteur à un véhicule particulier, ou à des conditions particulières, de pouvoir en faire varier le gain, c'est-à-dire de pouvoir régler le rapport de la force d'assistance à la force d'entrée, les brevets précédemment mentionnés ayant précisément pour objet des servomoteurs permettant d'opérer un tel réglage de façon relativement aisée.

En réalité, ces servomoteurs connus à gain variable sont caractérisés par le fait que la variation de gain est obtenue par une action directe sur l'organe de réaction, de sorte que toute imprécision sur cette action, résultant notamment des tolérances de fabrication, conduit à des imprécisions très importantes sur le gain réglé.

Ce problème se pose notamment dans le servomoteur du brevet US 4 690 034, qui comporte un disque de réaction et des leviers permettant une réaction réglable, le gain global de ce servomoteur étant représenté par le produit des gains individuellement introduits par le disque d'une part et par les leviers d'autre part.

Dans ce contexte, la présente invention a pour but de proposer un servomoteur à gain variable offrant, à la fois, une gamme très importante de réglage de gain, et la possibilité d'obtenir une précision très élevée dans le réglage du gain sur une gamme restreinte.

Dans ce but, le servomoteur de l'invention est essentiellement caractérisé en ce qu'en plus des éléments déjà mentionnés, il comprend des premiers moyens élastiques de première raideur pour exercer une première force d'écartement entre le piston et la tige de poussée, et des seconds moyens élastiques de seconde raideur pour exercer une seconde force d'écartement entre l'organe de réaction et la tige de poussée, et en ce que les moyens de modulation comprennent des moyens pour faire varier l'une au moins desdites première et seconde raideurs.

Grâce à cette disposition, le gain réglé reste fonction du gain intrinsèquement fourni par l'organe de réaction, et ne s'en écarte que par une grandeur représentée par un rapport lui-même susceptible d'être déterminé avec une précision relativement élevée.

Selon un mode préféré de l'invention, les moyens de modulation comprennent des moyens pour faire varier l'une au moins desdites première et seconde raideurs.

Selon un premier mode de réalisation possible, les premiers moyens élastiques comprennent une lame ressort plane en couronne présentant un bord extérieur et un bord intérieur, l'un au moins de ces bords forme des languettes radiales qui lui servent d'appuis, et le piston s'appuie sur le bord extérieur de la lame ressort et la tige de poussée sur le bord intérieur, le piston et la tige de poussée formant des premières pièces d'appui, et la lame ressort formant avec ces premières pièces d'appui des éléments d'une première transmission de force.

Dans ce cas, il est avantageux de prévoir que les languettes radiales se développent en largeur sur des secteurs angulaires de valeurs différentes, que l'un au moins des éléments de la première transmission de force soit entraînable en rotation autour de l'axe commun pour pouvoir adopter plusieurs positions angulaires opérationnelles différentes par rapport aux autres éléments de cette première transmission de force, et que les moyens de modulation comprennent des bossages d'appui solidaires de l'une des premières pièces d'appui, ces bossages s'appuyant sur au moins deux languettes radiales de largeurs identiques de la lame ressort pour chaque position angulaire opérationnelle de l'élément entraînable en rotation, et s'appuyant sur des languettes de largeurs différentes pour deux positions angulaires opérationnelles différentes de ce même élément entraînable en rotation.

Par exemple, les bossages d'appui peuvent alors être solidaires de la tige de poussée, et les seconds moyens élastiques peuvent comprendre au moins une rondelle Belleville.

Selon un second mode de réalisation possible et cumulable avec les caractéristiques précédentes à l'exception de la toute dernière, les seconds moyens élastiques comprennent un diaphragme élastique sensiblement plan et circulaire et présentant des découpes délimitant des premières zones d'appui et des secondes zones d'appui, et les secondes zones d'appui se développent en longueur sur des secteurs angulaires contigus et sont sensiblement superposables l'une à l'autre par rotation du diaphragme autour de l'axe commun, chaque seconde zone d'appui présentant des raideurs différentes pour une force appliquée en deux points différents de sa longueur suivant une direction sensiblement perpendiculaire au plan du diaphragme.

Dans ce cas, le servomoteur peut comprendre deux secondes pièces d'appui, dont l'une est constituée par la tige de poussée, pour coopérer séparément avec les premières et secondes zones d'appui du diaphragme élastique, ce dernier formant avec ces secondes pièces d'appui des organes d'une seconde transmission de force ; par ailleurs l'un au moins de ces organes est susceptible d'être entraîné en rotation autour de l'axe commun pour pouvoir adopter plusieurs positions angulaires opérationnelles différentes par rapport aux autres organes de la seconde transmission de force, et les moyens de modulation comprennent des pions d'appui solidaires de l'une des secondes pièces d'appui, angulairement répartis comme les secondes zones d'appui, pointant vers ces dernières en direction de l'axe commun, et susceptibles de venir sélectivement en appui sur ces secondes zones en différentes points de leur longueur.

Enfin, les pions d'appui sont par exemple solidaires de la tige de poussée.

D'autres caractéristiques et avantages de l'invention ressortiront clairement de la description qu'en est faite ci-après, à titre indicatif et nullement limitatif, en référence aux dessins annexés, dans lesquels :

- La Figure 1 est une vue en coupe schématique d'un servomoteur conforme à l'invention ;

- La Figure 2 est un schéma théorique illustrant le principe de l'invention ;

- La Figure 3 est une vue en perspective partielle d'un servomoteur conforme à l'invention ;

- La Figure 4, constituée des Figures 4a, 4b, 4c, est une vue en perspective partielle des organes de la seconde transmission de force d'un servomoteur conforme à l'invention ; et

- La Figure 5 est une vue en coupe partielle d'un servomoteur mettant en oeuvre le second mode particulier de réalisation de l'invention, le second ressort étant vu suivant la ligne V-V de la Figure 4b.

L'invention concernant un perfectionnement aux servomoteurs pneumatiques d'assistance au freinage, elle ne peut être bien appréhendée dans une compréhension au moins succincte de ces derniers.

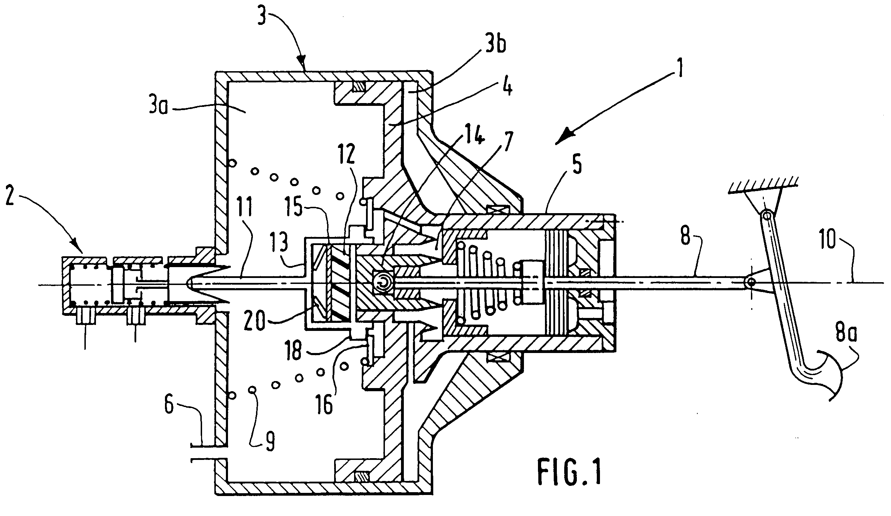

Cependant, la constitution générale et le fonctionnement des servomoteurs étant bien connus de l'homme de l'art, ces éléments d'information ne seront que rapidement rappelés ici dans leur contexte, en référence à la Figure 1.

Schématiquement, un système de freinage à assistance pneumatique comprend un servomoteur 1 et un maître-cylindre 2.

Le servomoteur comprend lui-même une enveloppe rigide 3 séparée en deux chambres 3a et 3b, de façon étanche, par une cloison mobile 4 solidaire d'un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers un raccord 6.

La pression dans la chambre arrière 3b est contrôlée par un clapet 7, commandé par une tige de commande 8, laquelle est reliée à une pédale de frein 8a.

Lorsque la tige de commande 8 est en position de repos, en l'occurrence tirée vers la droite, le clapet 7 établit une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 9.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres alors ressentie par la cloison mobile 4 exerce sur le piston 5 une poussée qui tend à le déplacer vers la gauche en comprimant le ressort 9.

L'effort de freinage exercé sur la tige de commande 8, ou "force d'entrée" et l'effort d'assistance au freinage, ou "force d'assistance", résultant de la différence de pression à laquelle est soumise la cloison mobile 4, sont alors appliqués ensemble suivant l'axe 10 du servomoteur en direction du maître-cylindre 2, et se conjuguent pour constituer une force d'actionnement, exercée sur le maître-cylindre 2 par la tige de poussée 11.

En réalité, la conjugaison des forces d'entrée et d'assistance implique, de façon plus précise mais tout à fait connue, un organe de réaction 12, propre à recevoir la force d'entrée et une fraction au moins de la force d'assistance et à opposer à cette force d'entrée une partie de cette fraction au moins de la force d'assistance de manière à assurer l'asservissement du servomoteur.

L'invention est a priori compatible avec toutes les formes particulières de réalisation de l'organe de réaction, qu'elles utilisent par exemple des leviers ou des pistons hydrauliques de façon connue en soi, mais est illustrée avec un disque de réaction 12, ce dernier constituant l'organe de réaction le plus couramment utilisé aujourd'hui.

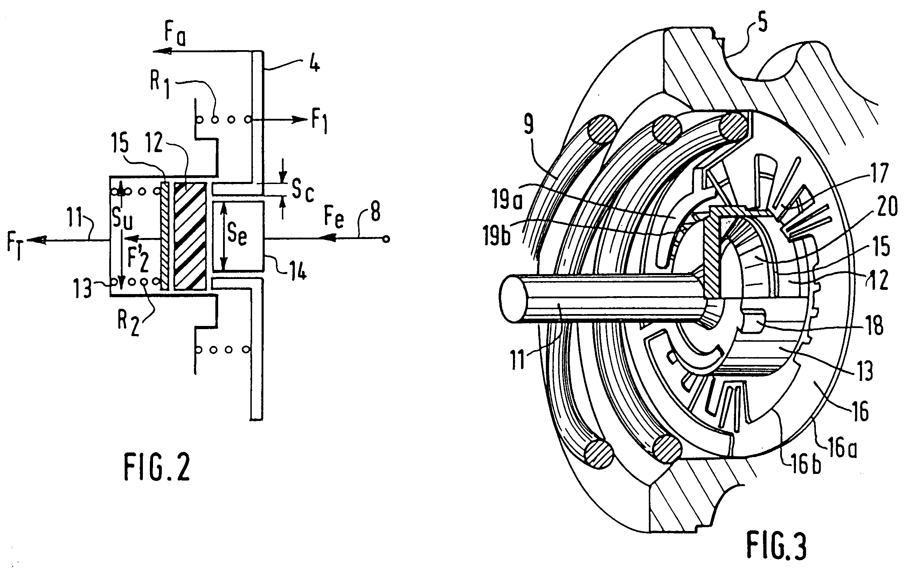

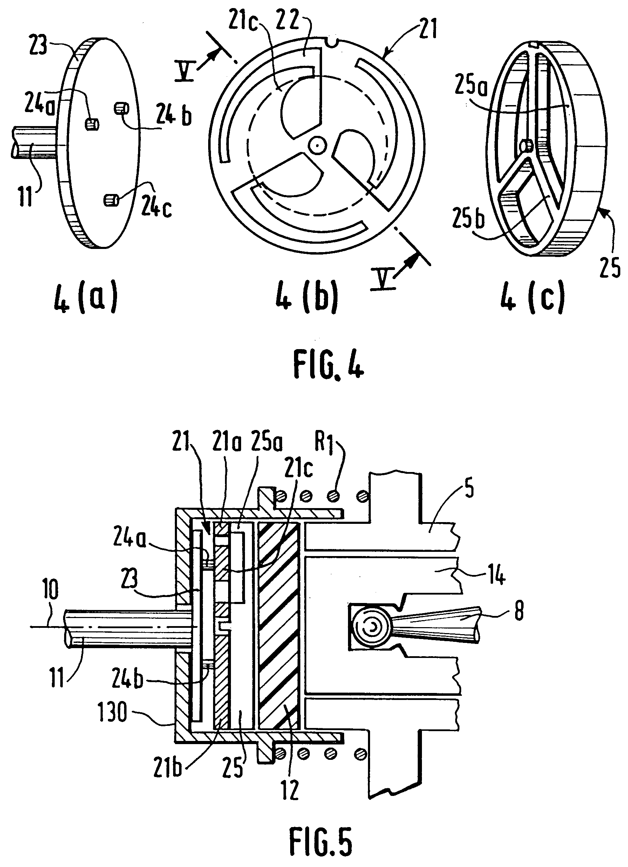

Ce disque 12, logé dans une coupelle 13 solidaire de la tige de poussée 11, reçoit la force d'entrée Fe à travers un palpeur 14 sur une surface Se (Figure 2) et une force complémentaire Fc que lui transmet la paroi mobile 4 sur une surface Sc.

Dans ces conditions, la force totale F'2 que le disque 12 transmet à la tige de poussée 11 par l'intermédiaire de sa surface utile Su est liée aux autres forces Fe et Fc par la relation : $F'2/Su = Fe/Se = Fc/Sc$ , qui résulte en l'occurrence du fait que la pression interne du disque 12 est la même en tous les points de ce dernier, mais qui pourrait être vérifiée avec tout autre organe de réaction, éventuellement pour d'autres raisons physiques.

Selon l'invention, la force complémentaire Fc qui transite à travers l'organe de réaction 12 en direction de la tige de poussée 11 n'est qu'une fraction de la force d'assistance Fa qu'exerce la cloison mobile 4 à destination du maître-cylindre 2 sous l'effet de la différence de pression entre les chambres 3a et 3b.

En effet, un ressort R1 tend à écarter la jupe rigide 4 et/ou le piston 5 de la tige de poussée 11 en produisant une première force d'écartement F1, de sorte que : Fc = Fa - F1.

D'autre part, un ressort R2 exerce entre la tige de poussée 11 et l'organe de réaction 12, une force F2 égale et opposée à la force F'2.

Si l'organe de réaction 12 est un disque élastomère, comme représenté sur les figures, un disque rigide 15 est interposé entre le disque de réaction 12 et le ressort R2, de manière que les forces F2 et F'2 soient appliquées sur toute la surface utile Su du disque élastomère 12.

Si k1 et k2 sont les raideurs respectives des premier et second ressorts R1 et R2, si "r" désigne le rapport k1/k2, et si "s" désigne le rapport Sc/Su, la force totale Ft reçue par la tige de poussée 11 dans les conditions décrites est égale à :

$$Ft = (1 + r) \cdot Fe / (1 - s)$$

Le gain G, représenté par le rapport de la force d'actionnement Ft à la force d'entrée Fe est donc égal à :

$$G = (1 + r) / (1 - s)$$

et dépend du rapport r des raideurs k1 et k2, et d'un terme constant $1 / (1 - s)$.

Dans ces conditions, la variation du gain G peut donc être obtenue par variation du rapport r, et par exemple par variation de l'une au moins des raideurs k1 et k2.

Les Figures 1 et 3 représentent un mode de réalisation dans lequel le gain G est réglé par variation de la raideur k1 du ressort R1, tandis que les Figures 4 et 5 illustrent un mode de réalisation dans lequel le gain G est réglé par modification de la raideur k2 du ressort R2, un réglage de gain par variation des deux raideurs k1 et k2 étant également possible pourvu qu'elle implique une variation du rapport r.

Dans le premier mode de réalisation illustré (figures 1 et 3), le premier ressort R1 prend la forme d'une lame ressort en couronne 16, sensiblement plane, dont le bord extérieur 16a, sensiblement circulaire, prend appui sur le piston 5 ou son prolongement, cette lame ressort 16 étant par exemple appliquée contre une face annulaire axiale du piston 5 par le ressort de rappel 9.

Le bord intérieur 16b de la lame ressort 16 forme des languettes radiales, telles que 17, qui servent d'appuis à la tige de poussée 11 par l'intermédiaire de bossages d'appui, tels que 18, formés à la périphérie de la coupelle 13 et par conséquent solidaires de cette tige de poussée 11.

Cette même tige de poussée 11 est montée à rotation autour de l'axe 10, sa position de rotation étant repérée et maintenue par tout moyen approprié, et par exemple par des éléments de cliquet 19a, 19b.

La tige de poussée 11 peut ainsi adopter plusieurs positions angulaires fonctionnelles, c'est-à-dire correspondant à un fonctionnement normal du servomoteur.

Les languettes 17 se développent, dans le sens de leur largeur, sur des secteurs angulaires de valeurs différentes, et les bossages 18 sont eux-mêmes angulairement répartis de façon telle qu'ils s'appuient par exemple sur trois languettes radiales de largeurs identiques pour chaque position angulaire fonctionnelle de la tige de poussée et de façon telle que les largeurs des languettes sur lesquelles s'appuient ces bossages 18, pour deux positions angulaires fonctionnelles différentes de la tige de poussée, soient elles-mêmes différentes.

A titre d'exemple, les bossages 18 sont angulairement disposés à 120° les uns des autres et ont une largeur L1, tandis que les languettes sont angulairement disposées à 30° les unes des autres et présentent successivement des largeurs L1, L2, L3, L4, L1, L2, L3, L4, L1, L2, L3, L4, les largeurs L1, L2, L3, et L4 étant classées par ordre croissant.

Le ressort R2 peut quant à lui être simplement constitué par une ou plusieurs rondelles Belleville 20 interposées entre le disque rigide 15 et le fond de la coupelle 13.

La description précédente n'est, bien entendu, pas limitative des formes de réalisation des éléments cités. Il est en effet aisé à l'homme de l'art d'imaginer d'autres mises en oeuvre, par exemple, du premier ressort R1. Des valeurs de raideur différentes, des différentes languettes peuvent également résulter de longueurs différentes de ces dernières, d'épaisseurs différentes, ou bien encore de modes de réalisation dans lesquels ces dites languettes comprennent des éléments de renforcement de leur rigidité. Par exemple, on peut réaliser des rainurages par emboutissage dans leur plus grande longueur. Les géométries de ces rainurages pourraient être différentes pour les différentes languettes.

L'homme de l'art peut également réaliser un ressort R1 dont toutes les languettes sont identiques ; la variation de la raideur k1 est alors obtenue en faisant varier le nombre de languettes coopérant entre la coupelle 13 et le piston 5.

Dans un second mode possible de réalisation de l'invention (figures 4 et 5), dans lequel le gain G est réglé par variation de la raideur k2 du second ressort R2, ce dernier prend par exemple la forme d'un diaphragme élastique 21, sensiblement plan et circulaire.

Ce diaphragme est partagé par des découpes telles que 22 en des premières zones d'appui, telles que 21a, 21b, et en des secondes zones d'appui telles que 21c, ces dernières étant formées par des languettes se développant en longueur sur des secteurs angulaires contigus et présentant par exemple une symétrie d'ordre 3 autour de l'axe 10.

Les secondes zones d'appui sont susceptibles d'être élastiquement déplacées hors du plan du diaphragme par application d'une force perpendiculaire à ce plan et présentent des raideurs différentes en deux points différents de leur longueur curviligne, cette dernière étant indiquée par des arcs pointillés sur la Figure 4b.

La tige de poussée 11, muni d'un disque 23 lui-même doté de pions d'appui 24a, 24b, 24c, constitue une pièce d'appui destinée à coopérer exclusivement avec les secondes zones d'appui, telles que 21c, du diaphragme 21, tandis qu'un disque rigide 25, sur lequel s'applique (sur sa face droite, plane et non visible sur la Figure 4c) le disque de réaction 12 et qui présente au moins un relief périphérique 25a, constitue une autre pièce d'appui destinée à coopérer exclusivement avec les premières zones d'appui du diaphragme 21.

Le disque 23, le diaphragme 21, le disque rigide 25, et le disque de réaction 12 sont logés dans une coupelle 130, analogue à la coupelle 13 de la Figure 1, mais par rapport à laquelle la tige de poussée 11 peut être entraînée en rotation, alors que les autres éléments 21, 25 et 12 sont fixes en rotation par rapport à cette coupelle 130.

La coupelle 130 est elle-même repoussée du piston 5 par un ressort R1 adoptant par exemple la forme d'un ressort hélicoïdal.

Comme le montre la Figure 5, les pions d'appui tels que 24a pointent axialement vers les secondes zones d'appui respectives, présentent la même répartition angulaire que ces dernières, et sont donc disposés à 120° les uns des autres dans l'exemple illustré aux Figures 4 et 5.

Dans ces conditions, la rotation de la tige de poussée 11 autour de l'axe 10 permet de placer les pions d'appui 24a, 24b, 24c, solidaires de cette tige 11, aux points respectifs des secondes zones du diaphragme 21 qui, parmi tous les points possibles (distribués sur les arcs de cercle en pointillés sur la Figure 4b), sont ceux pour lesquels le diaphragme 21 présente la raideur k2 souhaitée.

Comme l'homme de l'art le comprendra à la lecture de la description qui précède, la présente invention permet différents modes de mise en oeuvre, offrant la possibilité d'une variation continue ou discontinue du gain G.

En outre, bien que le réglage de gain soit opéré par rotation de la tige de poussée dans les exemples illustrés, la rotation de toute pièce coopérant avec cette tige, et dont seule importe la rotation relative avec celle-ci, conduirait au même résultat.

Il est bien entendu également que le sens des contraintes appliquées aux ressorts R1 et R2 est indifférent, pourvu que ces derniers exercent des forces d'écartement.

Par exemple, le disque 23 pourrait prendre la forme du disque 25 et inversement, le disque 25 étant alors muni de pions d'appui, auquel cas le réglage de gain serait obtenu par rotation relative de l'ensemble tige 11 - diaphragme 21 par rapport au disque 25 modifié.

Il serait également possible, à partir de l'exemple illustré à la Figure 4, de supprimer les reliefs radiaux 25b du disque 25, auquel cas le changement de gain pourrait être obtenu par la seule rotation du diaphragme 21, la tige de poussée 11 et le disque rigide 25 restant alors fixes en rotation par rapport au servomoteur.

Enfin, un organe moteur électrique relié à l'extérieur du servomoteur peut avantageusement être prévu à l'intérieur de ce dernier, pour entraîner la pièce ou l'ensemble de pièces dont la rotation assure la variation du gain G, cette disposition permettant de piloter cette variation de gain depuis l'extérieur du servomoteur.

**Revendications**

1. Servomoteur pneumatique d'assistance au freinage pour véhicule à moteur, comprenant notamment, sensiblement disposés suivant un axe commun (10), une tige de commande (8) propre à recevoir une force d'entrée, un clapet (7) dont l'ouverture est commandée par application de cette force d'entrée sur la tige de commande, un organe de réaction (12) propre à recevoir la force d'entrée et une fraction au moins de la force d'assistance et à opposer à cette force d'entrée une partie de cette fraction au moins de la force d'assistance, une tige de poussée (11) propre à recevoir, en provenance au moins de l'organe de réaction, une force d'actionnement composée desdites forces d'entrée et d'assistance, des moyens de modulation pour régler le rapport de la force d'assistance à la force d'entrée, et une enveloppe rigide (3) séparée de façon étanche en au moins deux chambres (3a, 3b) au moyen d'au moins une paroi mobile (4), susceptible d'être sollicitée, à l'ouverture du clapet, par une différence de pression entre les deux chambres et d'entraîner un piston (5) propre à développer ladite force d'assistance, caractérisé en ce qu'il comprend en outre des premiers moyens élastiques (R1, 16) de première raideur (k1) pour exercer une première force d'écartement entre le piston et la tige de poussée, et des seconds moyens élastiques (R2, 20, 21) de seconde raideur (k2) pour exercer une seconde force d'écartement entre l'organe de réaction et la tige de poussée, et en ce que lesdits moyens de modulation (18, 24a, 24b, 24c) comprennent des moyens pour faire varier l'une au moins desdites première et seconde raideurs.

2. Servomoteur suivant la revendication 1, caractérisé en ce que lesdits premiers moyens élastiques comprennent une lame ressort plane en couronne (16) présentant un bord extérieur et un bord intérieur, en ce que l'un au moins de ces bords forme des languettes radiales (17) qui lui servent d'appuis, et en ce que le piston (5) s'appuie sur le bord extérieur (16a) de la lame ressort et la tige de poussée sur le bord intérieur, le piston et la tige de poussée formant des premières pièces d'appui, et la lame ressort formant avec ces premières pièces d'appui des éléments d'une première transmission de force.

3. Servomoteur suivant la revendication 2, caractérisé en ce que les languettes radiales (17) se développent en largeur sur des secteurs angulaires de valeurs différentes, en ce que l'un au moins (11) des éléments de la première transmission de force est entraînable en rotation autour de l'axe commun (10) pour pouvoir adopter plusieurs positions angulaires opérationnelles différentes par rapport aux autres éléments de cette première transmission de force, et en ce que les moyens de modulation comprennent des bossages d'appui (18) solidaires de l'une des premières pièces d'appui, ces bossages s'appuyant sur au moins deux languettes radiales de largeurs identiques de la lame ressort pour chaque position angulaire opérationnelle de l'élément entraînable en rotation, et s'appuyant sur des languettes de largeurs différentes pour deux positions angulaires opérationnelles différentes de ce même élément entraînable en rotation.

4. Servomoteur suivant la revendication 3, caractérisé en ce que les bossages d'appui sont solidaires de la tige de poussée (11).

5. Servomoteur suivant la revendication 1, caractérisé en ce que les seconds moyens élastiques (20) comprennent au moins une rondelle Belleville.

6. Servomoteur suivant la revendication 1, caractérisé en ce que les seconds moyens élastiques comprennent un diaphragme élastique sensiblement plan et circulaire (21) et présentant des découpes (22) délimitant des premières zones d'appui (21a, 21b) et des secondes zones d'appui (21c), et en ce que les secondes zones d'appui se développent en longueur sur des secteurs angulaires contigus et sont sensiblement superposables l'une à l'autre par rotation du diaphragme autour de l'axe commun (10), chaque seconde zone d'appui présentant des raideurs différentes pour une force appliquée en deux points différents de sa longueur suivant une direction sensiblement perpendiculaire au plan du diaphragme.

7. Servomoteur suivant la revendication 6, caractérisé en ce qu'il comprend deux secondes pièces d'appui (23, 25), dont l'une est constituée par la tige de poussée (11), pour coopérer séparément avec les premières et secondes zones d'appui du diaphragme élastique, ce dernier formant avec ces secondes pièces d'appui des organes d'une seconde transmission de force, en ce que l'un au moins de ces organes est susceptible d'être entraîné en rotation autour de l'axe commun pour pouvoir adopter plusieurs positions angulaires opérationnelles différentes par rapport aux autres organes de la seconde transmission de force, et en ce que les moyens de modulation comprennent des pions d'appui (24a, 24b, 24c) solidaires de l'une des secondes pièces d'appui, angulairement répartis comme les secondes zones d'appui, pointant vers ces dernières en direction de l'axe commun, et susceptibles de venir sélectivement en appui sur ces secondes zones en différents points de leur longueur.

8. Servomoteur suivant la revendication 7, caractérisé en ce que les pions d'appui sont solidaires de la tige de poussée (11).

**Claims**

1. Pneumatic brake-booster for a motor vehicle, comprising particularly, substantially arranged along a common axis (10), a control rod (8) suitable for receiving an input force, a valve (7) which is opened by applying this input force to the control rod, a reaction leg (12) suitable for receiving the input force and at least a fraction of the boost force and for opposing to this input force at least part of this fraction of the boost force, a thrust rod (11) suitable for receiving, coming at least from the reaction leg, an actuation force composed of said input and boost forces, modulation means for adjusting the ratio of the boost force to the input force, and a rigid casing (3) separated in leaktight fashion into at least two chambers (3a, 3b) by means of at least one moving wall (4), capable of being stressed, when the valve is open, by a pressure difference between the two chambers and of driving a piston (5) capable of developing said boost force, characterized in that it further comprises first elastic means (R1, 16) of a first stiffness (k1) in order to exert a first spacing force between the piston and the thrust rod, and second elastic means (R2, 20, 21) of a second stiffness (k2) in order to exert a second spacing force between the reaction leg and the thrust rod, and in that said modulation means (18, 24a, 24b, 24c) comprise means for varying at least one of said first and second stiffnesses.

2. Booster according to Claim 1, characterized in that said first elastic means comprise a plane ring-shaped leaf spring (16) having an outer edge and an inner edge, in that at least one of these edges forms radial tabs (17) which serve as supports for it, and in that the piston (5) rests on the outer edge (16a) of the leaf spring and the thrust rod on the inner edge, the piston and the thrust rod forming first bearing components, and the leaf spring forming, together with these first bearing components, elements of a first force transmission.

3. Booster according to Claim 2, characterized in that the radial tabs (17) develop in width over angular sectors of different values, in that at least one (11) of the elements of the first force transmission can be rotationally driven about the common axis (10) in order to be able to adopt several different operational angular positions with respect to the other elements of this first force transmission, and in that the modulation means comprise support bosses (18) securely fastened to one of the first bearing components, these bosses resting on at least two radial tabs of identical width of the leaf spring for each operational angular position of the rotationally drivable element, and resting on tabs of different width for two different operational angular positions of this same rotationally drivable element.

4. Booster according to Claim 3, characterized in that the support bosses are securely fastened to the thrust rod (11).

5. Booster according to Claim 1, characterized in that the second elastic means (20) comprise at least one Belleville washer.

6. Booster according to Claim 1, characterized in that the second elastic means comprise a substantially plane and circular elastic diaphragm (21) having cutouts (22) delimiting first support zones (21a, 21b) and second support zones (21c), and in that the second support zones develop in length over contiguous angular sectors and can be substantially superimposed on one another by rotating the diaphragm about the common axis (10), each second support zone having different stiffnesses for a force applied to two different points on its length along a direction substantially perpendicular to the plane of the diaphragm.

7. Booster according to Claim 6, characterized in that it comprises two second bearing components (23, 25), one of which consists of the thrust rod (11), in order to interact separately with the first and second support zones of the elastic diaphragm, the latter forming, together with these second bearing components, members of a second force transmission, in that at least one of these members is capable of being rotationally driven about the common axis in order to be able to adopt several different operational angular positions with respect to the other members of the second force transmission, and in that the modulation means comprise support studs (24a, 24b, 24c) securely fastened to one of the second bearing components, angularly distributed like the second support zones, pointing toward the latter in the direction of the common axis, and capable of coming to bear selectively on these second zones at various points of their length.

8. Booster according to Claim 7, characterized in that the support pegs are securely fastened to the thrust rod (11).

**Patentansprüche**

1. Pneumatischer Servomotor zur Bremshilfe für Motorfahrzeuge, mit insbesondere folgenden und im wesentlichen entsprechend einer gemeinsamen Achse (10) angeordneten Elementen: einer Steuerstange (8), welche eine Eingangskraft aufnehmen kann, einem Ventil (7), dessen Öffnen durch das Anlegen dieser Eingangskraft an die Steuerstange gesteuert wird, einem Reaktionselement (12), welches die Eingangskraft sowie wenigstens einen Bruchteil der Hilfskraft aufnehmen und dieser Eingangskraft wenigstens einen Teil dieses Bruchteiles der Hilfskraft entgegensetzen kann, einer Schubstange (11), welche eine wenigstens von dem Reaktionselement stammende, sich aus der Eingangskraft und der Hilfskraft zusammensetzende Betätigungskraft aufnehmen kann, Modulationsmitteln, um das Verhältnis der Hilfskraft zu der Eingangskraft einzustellen, sowie einer auf dichte Weise mittels wenigstens einer beweglichen Wand (4) in wenigstens zwei Kammern (3a, 3b) geteilten starren Hülle (3), wobei diese Wand bei Öffnen des Ventils durch einen Druckunterschied zwischen den beiden Kammern belastet werden und einen die Hilfskraft erzeugenden Kolben (5) antreiben kann, dadurch gekennzeichnet, daß er weiterhin erste elastische Mittel (R1, 16) mit einer ersten Steifigkeit (kl) aufweist, um eine erste Spreizkraft zwischen dem Kolben und der Schubstange auszuüben, sowie zweite elastische Mittel (R2, 20, 21) mit einer zweiten Steifigkeit (k2) aufweist, um eine zweite Spreizkraft zwischen dem Reaktionselement und der Schubstange auszuüben, und daß die Modulationsmittel (18, 24a, 24b, 24c) Mittel aufweisen, um wenigstens eine der ersten und zweiten Steifigkeiten zu variieren.

2. Servomotor nach Anspruch 1, dadurch gekennzeichnet, daß die ersten elastischen Mittel ein flaches kranzförmiges Federblatt (16) mit einem äußeren Rand sowie einem inneren Rand aufweisen, daß wenigstens einer dieser Ränder radiale Zungen (17) bildet, die diesem als Auflagen dienen, und daß der Kolben (5) an dem äußeren Rand (16a) des Federblattes und die Schubstange an dem inneren Rand anliegt, wobei der Kolben und die Schubstange erste Anlagestücke bilden und wobei das Federblatt mit diesen ersten Anlagestücken Elemente einer ersten Kraftübertragung bilden.

3. Servomotor nach Anspruch 2, dadurch gekennzeichnet, daß die radialen Zungen (17) sich in der Breite über Winkelsektoren unterschiedlicher Werte erstrecken, daß wenigstens eines (11) der Elemente der ersten Kraftübertragung um die gemeinsame Achse (10) drehbar ist, um mehrere im Verhältnis zu den anderen Elementen dieser ersten Kraftübertragung unterschiedliche Betriebswinkelstellungen einnehmen zu können, und daß die Modulationsmittel mit einem der ersten Anlagestücke fest verbundene Anlagevorsprünge (18) aufweisen, wobei diese Vorsprünge in jeder Betriebswinkelstellung des drehbaren Elementes an wenigstens zwei radialen Zungen gleicher Breite des Federblattes anliegen und in zwei verschiedenen Betriebswinkelstellungen desselben drehbaren Elementes an Zungen unterschiedlicher Breite anliegen.

4.  Servomotor nach Anspruch 3, dadurch gekennzeichnet, daß die Anlagevorsprünge mit der Schubstange (11) fest verbunden sind.

5.  Servomotor nach Anspruch 1, dadurch gekennzeichnet, daß die zweiten elastischen Mittel (20) wenigstens eine Tellerfederscheibe aufweisen.

6.  Servomotor nach Anspruch 1, dadurch gekennzeichnet, daß die zweiten elastischen Mittel eine im wesentlichen flache und kreisförmige Federplatte (21) enthalten, die erste Anlagebereiche (21a, 21b) sowie zweite Anlagebereiche (21c) begrenzende Ausschnitte (22) aufweist, und daß sich die zweiten Anlagebereiche in der Länge über aneinandergrenzende Winkelsektoren erstrecken und im wesentlichen durch Drehen der Federplatte um die gemeinsame Achse (10) einander überlagert werden können, wobei jeder zweite Anlagebereich für eine Kraft, die an zwei verschiedenen Punkten seiner Länge im wesentlichen senkrecht zu der Ebene der Federplatte angelegt wird, unterschiedliche Steifigkeiten aufweist.

7.  Servomotor nach Anspruch 6, dadurch gekennzeichnet, daß er zwei zweite Anlagestücke (23, 25) aufweist, von denen eines von der Schubstange (11) gebildet wird, um mit den ersten und zweiten Anlagebereichen der elastischen Federplatte getrennt zusammenzuwirken, wobei letztere mit diesen zweiten Anlagestücken Elemente einer zweiten Kraftübertragung bildet, daß wenigstens eines dieser Elemente um die gemeinsame Achse drehbar ist, um mehrere im Verhältnis zu den anderen Elementen der zweiten Kraftübertragung unterschiedliche Betriebswinkelstellungen einnehmen zu können, und daß die Modulationsmittel Anlagestifte (24a, 24b, 24c) enthalten, die mit einem der zweiten Anlagestücke fest verbunden sind, winkelmäßig wie die zweiten Anlagebereiche verteilt sind, auf letztere in Richtung der gemeinsamen Achse gerichtet sind und an diesen zweiten Bereichen wahlweise an unterschiedlichen Punkten ihrer Länge zur Anlage kommen können.

8.  Servomotor nach Anspruch 7, dadurch gekennzeichnet, daß die Anlagestifte mit der Schubstange (11) fest verbunden sind.

FIG.1

FIG.3

FIG.2

FIG. 4

FIG.5